# EUROPÄISCHE PATENTANMELDUNG

(11) **EP 2 075 576 A2**
(43) Veröffentlichungstag der Anmeldung: **01.07.2009**
(21) Anmeldenummer: 08105829.9
(22) Anmeldetag: 20.11.2008
(51) Int. Cl.: G01N 27/407

(54) **Sensorelement mit verbesserter Vergiftungsresistenz**

(30) Priorität: 27.12.2007 DE 102007062733
(71) Anmelder: ROBERT BOSCH GMBH, 70442 Stuttgart (DE)
(72) Erfinder: Baunach, Thorsten, 72119, Ammerbuch (DE); Buchholz, Martin, 74321, Bietigheim-Bissingen (DE); Runge, Henrico, 70435, Stuttgart (DE); Diehl, Lothar, 70839, Gerlingen (DE)

(57) **Zusammenfassung**

Die Erfindung betrifft ein Sensorelement (110) zur Bestimmung mindestens einer physikalischen Eigenschaft eines Gases in mindestens einem Messgasraum (112), insbesondere zur Bestimmung einer Sauerstoffkonzentration im Abgas einer Brennkraftmaschine. Das Sensorelement (110) umfasst mindestens eine erste Elektrode (116) und mindestens eine zweite Elektrode (118) und mindestens einen die erste Elektrode (116) und die zweite Elektrode (118) verbindenden Festelektrolyten (120). Die zweite Elektrode (118) ist über mindestens eine Verbindung (124) mit Gas aus dem Messgasraum (112) beaufschlagbar. Die Verbindung (124) weist mindestens eine Diffusionsbarriere (132) auf Die Diffusionsbarriere (132) weist mindestens einen ersten Bereich (144) und mindestens einen zweiten Bereich (146) auf, wobei der zweite Bereich (146) zwischen dem ersten Bereich (144) und der zweiten Elektrode (118) angeordnet ist. Der erste Bereich (144) weist eine geringere Porengröße auf als der zweite Bereich (146).

## Beschreibung

### Stand der Technik

Die Erfindung geht aus von bekannten Sensorelementen, welche auf elektrolytischen Eigenschaften bestimmter Festkörper beruhen, also der Fähigkeit dieser Festkörper, bestimmte Ionen zu leiten. Derartige Sensorelemente werden insbesondere in Kraftfahrzeugen eingesetzt, um Luft-Kraftstoff-Gasgemischzusammensetzungen zu messen, in welchem Fall diese Sensorelemente auch unter der Bezeichnung "Lambdasonde" bekannt sind und eine wesentliche Rolle bei der Reduzierung von Schadstoffen in Abgasen, sowohl in Ottomotoren als auch in der Dieseltechnologie, spielen.

Mit der so genannten Luftzahl "Lambda" (λ) wird dabei allgemein in der Verbrennungstechnik das Verhältnis zwischen einer tatsächlich angebotenen Luftmasse und einer für die Verbrennung theoretisch benötigten (d.h. stöchiometrischen) Luftmasse bezeichnet. Die Luftzahl wird dabei mittels eines oder mehrerer Sensorelemente zumeist an einer oder mehreren Stellen im Abgastrakt eines Verbrennungsmotors gemessen. Entsprechend weisen "fette" Gasgemische (d.h. Gasgemische mit einem Kraftstoffüberschuss) eine Luftzahl λ < 1 auf, wohingegen "magere" Gasgemische (d.h. Gasgemische mit einem Kraftstoffunterschuss) eine Luftzahl λ > 1 aufweisen. Neben der Kraftfahrzeugtechnik werden derartige und ähnliche Sensorelemente auch in anderen Bereichen der Technik (insbesondere der Verbrennungstechnik) eingesetzt, beispielsweise in der Luftfahrttechnik oder bei der Regelung von Brennern, z.B. in Heizanlagen oder Kraftwerken.

Derartige Sensorelemente sind mittlerweile in zahlreichen verschiedenen Ausführungsformen bekannt. Eine Ausführungsform ist die so genannte "Sprungsonde", deren Messprinzip auf der Messung einer elektrochemischen Potentialdifferenz zwischen einer einem Referenzgas ausgesetzten Referenzelektrode und einer dem zu messenden Gasgemisch ausgesetzten Messelektrode beruht. Referenzelektrode und Messelektrode sind über den Festelektrolyten miteinander verbunden, wobei aufgrund seiner Sauerstoffionen-leitenden Eigenschaften in der Regel dotiertes Zirkondioxid (z.B. Yttrium-stabilisiertes ZrO₂) oder ähnliche Keramiken als Festelektrolyt eingesetzt werden. Theoretisch weist die Potentialdifferenz zwischen den Elektroden gerade beim Übergang zwischen fettem Gasgemisch und magerem Gasgemisch einen charakteristischen Sprung auf, welcher genutzt werden kann, um die Gasgemischzusammensetzung um den Sprungpunkt λ = 1 aktiv zu regeln. Verschiedene Ausführungsbeispiele derartiger Sprungsonden, welche auch als "Nernst-Zellen" bezeichnet werden, sind beispielsweise in DE 10 2004 035 826 A1, DE 199 38 416 A1 und DE 10 2005 027 225 A1 beschrieben.

Alternativ oder zusätzlich zu Sprungsonden kommen auch so genannte "Pumpzellen" zum Einsatz, bei denen eine elektrische "Pumpspannung" an zwei über den Festelektrolyten verbundene Elektroden angelegt wird, wobei der "Pumpstrom" durch die Pumpzelle gemessen wird. Im Unterschied zum Prinzip der Sprungsonden stehen bei Pumpzellen in der Regel beide Elektroden mit dem zu messenden Gasgemisch in Verbindung. Dabei ist eine der beiden Elektroden (zumeist über eine durchlässige Schutzschicht) unmittelbar dem zu messenden Gasgemisch ausgesetzt. Die zweite der beiden Elektroden ist jedoch derart ausgebildet, dass das Gasgemisch nicht unmittelbar zu dieser Elektrode gelangen kann, sondern zunächst eine so genannte "Diffusionsbarriere" durchdringen muss, um in einen an diese zweite Elektrode angrenzenden Hohlraum zu gelangen. Als Diffusionsbarriere wird dabei zumeist eine poröse keramische Struktur mit gezielt einstellbaren Porenradien verwendet. Tritt mageres Abgas durch diese Diffusionsbarriere hindurch in den Hohlraum ein, so werden mittels der Pumpspannung Sauerstoffmoleküle an der zweiten, negativen Elektrode elektrochemisch zu Sauerstoffionen reduziert, durch den Festelektrolyten zur ersten, positiven Elektrode transportiert und dort als freier Sauerstoff wieder abgegeben. Die Sensorelemente werden zumeist im so genannten Grenzstrombetrieb betrieben, das heißt in einem Betrieb, bei welchem die Pumpspannung derart gewählt wird, dass der durch die Diffusionsbarriere eintretende Sauerstoff vollständig zur Gegenelektrode gepumpt wird. In diesem Betrieb ist der Pumpstrom näherungsweise proportional zum Partialdruck des Sauerstoffs im Abgasgemisch, so dass derartige Sensorelemente häufig auch als Proportionalsensoren bezeichnet werden. Im Gegensatz zu Sprungsensoren lassen sich derartige Proportionalsensoren als so genannte Breitbandsensoren über einen vergleichsweise weiten Bereich für die Luftzahl Lambda einsetzen. Derartige Breitbandsonden sind beispielsweise in DE 38 09 154 C1 und in DE 199 38 416 A1 beschrieben.

In vielen Sensorelementen werden die oben beschriebenen Sensorprinzipien auch kombiniert, so dass die Sensorelemente ein oder mehrere nach dem Sprungsensor-Prinzip arbeitende Sensoren ("Zellen") und ein oder mehrere Proportionalsensoren enthalten. So lässt sich beispielsweise das oben beschriebene Prinzip eines nach dem Pumpzellen-Prinzip arbeitenden "Einzellers" durch Hinzufügen einer Sprungzelle (Nernstzelle) zu einem "Doppelzeller" erweitern. Ein derartiger Aufbau ist beispielsweise in EP 0 678 740 B1 beschrieben. Dabei wird mittels einer Nernstzelle der Sauerstoffpartialdruck in dem oben beschriebenen, an die zweite Elektrode angrenzenden Hohlraum gemessen und die Pumpspannung durch eine Regelung so nachgeführt, dass im Hohlraum stets die Bedingung λ = 1 herrscht.

In vielen Fällen weisen Sensorelemente der beschriebenen Art mindestens eine Diffusionsbarriere mit porösen Materialien auf Derartige Diffusionsbarrieren ermöglichen beispielsweise einen Zutritt einer zu messenden Gaskomponente zu einer Elektrode (beispielsweise einer Pumpelektrode, einer Pumpzelle) und halten gleichzeitig nach Möglichkeit Verunreinigungen von dieser Elektrode fern. Weiterhin übernehmen diese Diffusionsbarrieren in Pumpzellen die Aufgabe, den Grenzstrom der Pumpzellen zu bestimmen bzw. einzustellen, was in vielen Fällen einen Grenzstrombetrieb der Sensorelemente, d.h. einen Betrieb, in welchem sämtliche zur Pumpelektrode gelangenden Messgasmoleküle abgepumpt werden, ermöglicht. Beispiele derartiger Diffusionsbarrieren sind in DE 102 52 712 A1 oder in DE 198 57 471 A1 beschrieben. Derartige Diffusionsbarrieren für Sensorelemente werden beispielsweise aus porösen keramischen Materialien gebildet. Beispiele derartiger Materialien sind Aluminiumoxid (Al₂O₃) oder Zirkondioxid (ZrO₂), wobei in letzterem Fall das Festelektrolytmaterial selbst auch zur Bildung der Diffusionsbarriere genutzt werden kann. Beispielsweise lassen sich Diffusionsbarrieren dadurch herstellen, dass einer Paste des keramischen Materials ein Porenbildner beigemischt wird, so dass sich beim Sintern der Paste bzw. des Schichtaufbaus eine poröse Diffusionsbarriere ausbildet.

Eine bekannte Problematik vieler Sensorelemente, die naturgemäß in vielen Fällen in rauen Umgebungen, wie beispielsweise Abgassträngen von Kraftfahrzeugen, eingesetzt werden, besteht in der Verschmutzung der Elektroden und/oder Diffusionsbarrieren. So werden beispielsweise durch ein Einströmen im reinen Magerbetrieb Ascheteilchen, welche sich zufällig vor der Diffusionsbarriere befinden, in diese hineingeströmt. Sie werden in der Regel so weit mittransportiert, bis ein Flaschenhals zwischen den Poren der Diffusionsbarriere sie aufhält, oder sie gelangen vollständig bis hin zur Elektrode oder in einen Elektrodenhohlraum dieser Elektrode. In allen genannten Fällen führt ein derartiger Eintrag von Fremdteilchen zu einer Veränderung der Sensoreigenschaften, beispielsweise der Strömungs- und/oder Diffusionseigenschaften der Diffusionsbarriere und/oder zu einer Veränderung der elektrochemischen Eigenschaften der Elektrode.

### Offenbarung der Erfindung

Erfindungsgemäß wird daher ein Sensorelement zur Bestimmung mindestens einer physikalischen Eigenschaft eines Gases in mindestens einem Messgasraum vorgeschlagen, welches eine erheblich verbesserte Resistenz gegenüber den genannten Verunreinigungseffekten aufweist. Das Sensorelement kann insbesondere ein Sensorelement zur Bestimmung einer Messgaskomponente in dem Messgasraum umfassen, beispielsweise zur Bestimmung einer Sauerstoffkonzentration, insbesondere im Abgas einer Brennkraftmaschine. Insofern kann beispielsweise auf die obige Beschreibung der Sensorelemente gemäß dem Stand der Technik verwiesen werden. Auch andere Arten von Sensorelementen, bei denen ähnliche Vergiftungsproblematiken auftreten, sind jedoch erfindungsgemäß einsetzbar bzw. modifizierbar.

Das erfindungsgemäße Sensorelement weist mindestens eine erste Elektrode und mindestens eine zweite Elektrode sowie mindestens einen die erste Elektrode und die zweite Elektrode verbindenden Festelektrolyten auf Dabei ist das Sensorelement derart eingerichtet, dass die zweite Elektrode mit dem Messgasraum über mindestens eine Verbindung mit Gas beaufschlagbar ist, wobei die Verbindung mindestens eine Diffusionsbarriere aufweist. Bezüglich der Ausgestaltung dieser Diffusionsbarriere kann wiederum auf die obige Beschreibung des Standes der Technik verwiesen werden, so dass beispielsweise poröse keramische Materialien wie Al₂O₃ und/oder ZrO₂ in dieser Diffusionsbarriere verwendet werden können. Die "Verbindung" kann beispielsweise unmittelbar erfolgen und/oder kann über einen oder mehrere Verbindungskanäle erfolgen, wie unten näher ausgeführt wird.

Insofern kann das vorgeschlagene Sensorelement beispielsweise den aus dem Stand der Technik bekannten Sensorelementen, beispielsweise Sensorelementen mit Pumpzellen, entsprechen. Zur Lösung der oben beschriebenen Verschmutzungsproblematik beruht die vorliegende Erfindung auf einer Betrachtung der Transportprozesse der Gaskomponenten und der Verschmutzungen (beispielsweise feste und/oder flüssige Verschmutzungen, beispielsweise Ascheteilchen etc.) innerhalb der Diffusionsbarriere.

Im Folgenden sei dies am Beispiel einer Partialdruckmessung von Sauerstoff in dem Gas verdeutlicht, wobeijedoch beispielsweise auch andere Gaskomponenten als Sauerstoff messbar sein können. In den Transportprozessen stehen sich zum einen ein Strömungstransport, welcher durch eine Druckdifferenz vor und nach der Diffusionsbarriere in der Verbindung getrieben wird, und ein Diffusionstransport, welcher durch Konzentrationsunterschiede vor und nach der Diffusionsbarriere angetrieben wird, gegenüber. Bei Sensorelementen mit einem Grenzstrom, welcher überwiegend durch die Gasphasendiffusion von Sauerstoff durch die Diffusionsbarriere bestimmt wird, ist der Grenzstromdruck unabhängig, da sich die Druckabhängigkeit der Diffusion auf Grund der Abnahme der mittleren freien Weglänge mit dem Inversen des Drucks mit dem höheren Partialdruck des Sauerstoffs kompensiert. Bei Diffusionsbarrieren mit kleineren Poren hingegen wird die mittlere freie Weglänge vom Porenradius bestimmt und ist daher konstant. Letzterer Bereich wird somit durch die so genannte Knudsen-Diffusion bestimmt, bei welcher der Sauerstofftransport druckabhängig ist, da auch hier die Konzentration des Sauerstoffs zunimmt mit dem Druck.

Aufgrund der Diffusionsprozesse und dem in der Regel erfolgenden Abtransport des Sauerstoffs von der zweiten Elektrode, beispielsweise durch Pumpprozesse, bildet sich somit ein Konzentrationsüberschuss der übrigen Gaskomponenten, beispielsweise Stickstoff, vor der zweiten Elektrode aus. Dieser Konzentrationsüberschuss wird durch Diffusionsprozesse ausgeglichen, beispielsweise indem Sauerstoff über die Diffusionsbarriere eindiffundiert und Stickstoff über die Diffusions barriere aus diffundiert. Mit einer Aus diffusion des Stickstoffs im Magerbetrieb des Sensorelements bildet sich jedoch eine Gesamtdruckdifferenz zwischen dem Bereich vor der Diffusionsbarriere und dem Bereich hinter der Diffusionsbarriere, also an der zweiten Elektrode, aus, welche wiederum Antriebsfaktor für eine Strömung darstellt. Bei niedrigem Strömungswiderstand der Diffusionsbarriere reicht diese Gesamtdruckdifferenz aus, um Abgas dauernd einströmen zu lassen, wodurch beispielsweise Ascheteilchen und/oder andere Verunreinigungen, welche sich zufällig vor der Diffusionsbarriere befinden, durch diese eingeströmt werden und die oben beschriebene Problematik erzeugen.

Insgesamt besteht somit das Dilemma, dass zum einen eine möglichst feinporige Diffusionsbarriere wünschenswert wäre, welche einen hohen Strömungswiderstand aufweist, und somit einen strömungsgetriebenen Eintrag von Verunreinigungen verhindert. Andererseits bedingt jedoch eine feinporige Diffusionsbarriere einen sehr niedrigen Grenzstrom des Sensorelements, verbunden mit einer geringen Sensitivität, geringem Signalhub, hohem Rauschen und ähnlichen nachteiligen Effekten. Weiterhin weisen Sensorelemente mit feinporigen Diffusionsbarrieren, wie oben dargestellt, eine hohe statische Druckabhängigkeit auf, welche in die Genauigkeit der Sensorelemente auf Grund des in der Regel nur mit hohen Fehlertoleranzen bekannten Gesamtdrucks eingeht.

Erfindungsgemäß wird dieser Zielkonflikt dadurch gelöst, dass die Diffusionsbarriere mindestens einen ersten Bereich und mindestens einen zweiten Bereich aufweist, wobei der zweite Bereich zwischen dem ersten Bereich und der zweiten Elektrode angeordnet ist. Dabei ist der erste Bereich feinporiger, d.h. mit einer geringeren Porengröße, ausgestaltet als der zweite Bereich. Die Erfindung beruht auf dem Grundgedanken, dass der Druckverlauf innerhalb der Diffusionsbarrieren nicht gleichmäßig ist, sondern insbesondere im Anfangsbereich der Diffusionsbarriere einen höheren Gradienten aufweist als im der zweiten Elektrode zugewandten Bereich. Nur in diesem ersten Bereich, welcher in der Regel erheblich kleiner ist als der zweite Bereich, ist eine Erhöhung des Strömungswiderstands durch feinporige Ausgestaltung der Diffusionsbarriere erforderlich. Vorzugsweise wird somit die Diffusionsbarriere nicht auf ihrer ganzen Länge mit hohem Strömungswiderstand versehen, sondern nur in ihrem Eingangsbereich. Da hier kein Transport der Verunreinigungen, insbesondere der Ascheteilchen, mehr erfolgt, ist der niedrige Strömungswiderstand und der hohe Transport in der restlichen Diffusionsbarriere ohne Belang für eine Vergiftung der Diffusionsbarriere und/oder der zweiten Elektrode. Nur der lokale Strömungswiderstand entscheidet, ob der durch den lokalen Partialdruckgradienten aufgebaute Gesamtdruckgradient zum Strömungseintransport führt oder nicht. Insofern genügt eine kurze Unterbrechung der "Transportkette" in der Diffusionsbarriere, um eine Vergiftung durch Strömungseffekte wirksam zu vermeiden.

Eine durch Diffusionseffekte bedingte Vergiftung bzw. ein Eintrag von Verunreinigungsteilchen durch Diffusion spielt in der Regel eine gegenüber Strömungseffekten weit untergeordnete Rolle. Dies lässt sich beispielsweise am Betrieb eines ungepumpten Sensorelements nachweisen, welches auch nach Dauertests praktisch keine Vergiftung der Diffusionsbarriere und/oder der zweiten Elektrode aufweist. Durch die kurze Zone mit statischer Druckabhängigkeit wird somit die gesamte statische Druckabhängigkeit der Diffusionsbarriere nur geringfügig erhöht und damit die geforderte Genauigkeit der Kompensation des wechselnden Gesamtdrucks über das fehlerbehaftete Druckmodell eingehalten.

Neben dem ersten Bereich und dem zweiten Bereich kann die Diffusionsbarriere auch weitere Bereiche umfassen. Vorzugsweise grenzen der erste Bereich und der zweite Bereich jedoch unmittelbar aneinander an, so dass diese in Strömungsrichtung (d.h. in Transportrichtung vom Messgasraum hin zur zweiten Elektrode) unmittelbar hintereinander angeordnet sind. Dabei kann die Porengröße einen gestuften Verlauf mit einer hin zur zweiten Elektrode zumindest abschnittsweise stufenweise verlaufend zunehmenden Porengröße bilden. In der Praxis wird jedoch, insbesondere im Übergangsbereich zwischen dem ersten Bereich und dem zweiten Bereich, ein Gradient im Verlauf der Porengröße auftreten. Auch ein anderer Verlauf der Porengröße als ein stufenweiser Verlauf sind also denkbar, beispielsweise ein stetiger Verlauf mit einer hin zur zweiten Elektrode zumindest abschnittsweise stetig zunehmenden Porengröße.

Zwischen der Diffusionsbarriere und der zweiten Elektrode kann weiterhin mindestens ein innerer Hohlraum angeordnet sein, welcher häufig auch als Kathodenhohlraum oder Elektrodenhohlraum bezeichnet wird, wobei diese Bezeichnung jedoch bereits von der Beschaltung des Sensorelements abhängig ist. Dieser Hohlraum kann wahlweise unausgefüllt sein oder kann auch mit einem grobporigen porösen Material gefüllt sein, beispielsweise wiederum Al₂O₃.

Wie oben dargestellt, genügt es somit, einen kurzen ersten Bereich mit hohem Strömungswiderstand einzufügen, welcher den übrigen Strömungsverlauf in der Diffusionsbarriere nicht wesentlich bee influsst, jedoch einen wirksamen Schutz vor Verunreinigungen darstellt. Als besonders bevorzugt hat es sich erwiesen, wenn der erste Bereich mindestens ein erstes poröses Material mit mindestens einer der folgenden Eigenschaften aufweist:
- einen mittleren Porendurchmesser zwischen 0,2 Mikrometern und 3 Mikrometern,
- eine mittlere Porosität zwischen 5% und 50%,
- einen Labyrinthfaktor L1 zwischen 1,2 und 3.

Dabei kann das erste poröse Material beispielsweise, wie oben beschrieben, ein keramisches Material, wie beispielsweise Al₂O₃ und/oder ZrO₂ aufweisen, welches beispielsweise durch Beimischung eines Porenbildners (z.B. Glaskohle oder Theobromin) zu dem Ausgangsmaterial der Diffusionsbarriere vor dem Sintern hergestellt werden kann. Der Porendurchmesser ist dabei ein mittlerer Porendurchmesser, welcher beispielsweise durch Schliffbilder bestimmt werden kann, und welcher beispielsweise dem mittleren Durchmesser von Kreisen entspricht, welche dieselbe Fläche wie die Porenschliffe aufweisen. Unter der Porosität ist dabei das Verhältnis zwischen den Flächen der Poren und der Gesamtfläche in den Schliffbildern zu verstehen.

Der Labyrinthfaktor L1 ist einer der Korrekturfaktoren, welcher (beispielsweise neben der Porosität) mit dem Diffusionskoeffizienten des porösen Materials multipliziert werden muss, um zu einem "effektiven" Diffusionskoeffizienten zu gelangen, welcher Oberflächeneffekten und Effekten einer Krümmung, wechselndem Querschnitt der Poren und einem Zusammenhang der Poren Rechnung trägt. Das Inverse dieses Labyrinthfäktors L1 wird auch als "Tortuositätsfaktor" bezeichnet.

Analog hat es sich als vorteilhaft erwiesen, wenn der zweite Bereich mindestens ein zweites poröses Material mit mindestens einer der folgenden Eigenschaften aufweist:
- eine mittleren Porendurchmesser zwischen 1 Mikrometer und 10 Mikrometern,
- eine mittleren Porosität zwischen 20% und 80%,
- einen Labyrinthfaktor L2 zwischen 1 und 2.

Bezüglich der Definitionen von Porendurchmesser, Porosität und Labyrinthfaktor L2 kann auf die obigen Definitionen verwiesen werden. Das mindestens eine zweite poröse Material und das mindestens eine erste poröse Material können verschieden sein, können jedoch auch identische Materialien sein bzw. umfassen. So kann beispielsweise der Unterschied zwischen den ersten und zweiten porösen Materialien hinsichtlich ihrer Porendurchmesser lediglich dadurch erzeugt werden, dass einem Ausgangsmaterial unterschiedliche Mengen an Porenbildner, wie beispielsweise Glaskohle oder Theobromin, beigemischt werden.

Hinsichtlich der Längserstreckungen des ersten und zweiten Bereichs, also der Länge dieser Bereiche entlang einer Linie, welche jeweils lokal parallel zum Verlauf der Verbindung verläuft, hat es sich, wie oben beschrieben, als vorteilhaft erwiesen, den ersten Bereich erheblich kürzer im Vergleich zum zweiten Bereich auszugestalten. So kann beispielsweise der erste Bereich eine Längserstreckung 11 entlang der Verbindung aufweisen, welche im Bereich zwischen 0,1 mm und 3 mm liegt. Alternativ oder zusätzlich kann der zweite Bereich eine Längserstreckung 12 entlang der Verbindung aufweisen, welche im Bereich zwischen 0,1 mm und 10 mm liegt. Weiterhin kann, ebenfalls wiederum alternativ oder zusätzlich, das Verhältnis zwischen den Längserstreckungen 11 und 12 vorzugsweise im Bereich zwischen 1:1 und 1:100 liegen. Insgesamt kann die Diffusionsbarriere beispielsweise eine Länge im Bereich zwischen 0,2 mm und 10 mm aufweisen und beispielsweise eine Höhe (z.B. eine Schichtdicke oder einen S chichtquers chnitt) zwis chen 10 und 20 Mikrometern.

Weiterhin hat es sich als vorteilhaft erwiesen, wenn die Verbindung mindestens einen Verbindungskanal umfasst, in welchem die Diffusionsbarriere angeordnet ist. In diesem Fall kann vorzugsweise in dem Verbindungskanal vor der Diffusionsbarriere mindestens ein äußerer Hohlraum angeordnet sein. Diese Anordnung hat, wie unten näher ausgeführt wird, besondere Vorzüge hinsichtlich eines Verfahrens zur Herstellung der in mindestens zwei Bereich unterteilten Diffusionsbarriere, da in diesem äußeren Hohlraum beispielsweise ein Sinterhilfsmittel und/oder eine Sinterbremse angeordnet werden kann. Zusätzlich zu dem Verbindungskanal kann die Verbindung beispielsweise weiterhin auch ein Gaszutrittsloch aufweisen, wie dies beispielsweise von üblichen Breitbandsensorelementen bekannt ist. Besonders bevorzugt ist es dann, wenn der Verbindungskanal winklig von dem Gaszutrittsloch abzweigt, beispielsweise unter einem Winkel zwischen 60 und 90°, besonders bevorzugt bei ca. 90°. Diese winklige "Abzweigung" führt bereits dazu, dass aufgrund der Massenträgheit Verunreinigungen in vielen Fällen erst gar nicht in den Verbindungskanal gelangen können.

Neben dem Sensorelement gemäß einer oder mehreren der oben beschriebenen Ausführungsformen wird weiterhin ein Verfahren zur Herstellung eines Sensorelements, insbesondere eines der oben genannten Sensorelemente, vorgeschlagen, welches eine besonders einfach Herstellung der in mindestens zwei Bereiche unterteilten Diffusionsbarriere ermöglicht. Bei dem beschriebenen Verfahren wird, wie auch aus dem Stand der Technik bekannt, die Diffusionsbarriere durch Sintern mindestens eines Ausgangsmaterials erzeugt. Beispielsweise kann dies ein keramisches Ausgangsmaterial oder eine Mischung derartiger Materialien sein, beispielsweise ein Aluminiumoxid und/oder ein Zirkonoxid (z.B. Al₂O₃ und/oder ZrO₂) umfassendes Ausgangsmaterial sein. Neben keramischen Materialien kann das Ausgangsmaterial naturgemäß weitere Materialien umfassen, beispielsweise Bindermaterialien und/oder Lösungsmittel, welche eine Verarbeitung des Ausgangsmaterials ermöglichen. Beispielsweise kann das Ausgangsmaterial in Form einer Flüssigkeit und/oder einer Paste auf ein oder mehrere Substrate oder eine Schichtfolge von Substraten aufgebracht werden, in einem Bereich, in welchem später die Verbindung zur zweiten Elektrode entsteht. Zum Aufbringen können beispielsweise bekannte Dickschichtverfahren verwendet werden, wie beispielsweise Siebdruckverfahren und/oder Tauchschichtverfahren. Auch andere bekannte Verfahren, beispielsweise Dispensierverfahren, andere Druckverfahren oder ähnliches können selbstverständlich eingesetzt werden. Weiterhin kann eine Kombination des Ausgangsmaterials mit Thermos chocks chutzs chichten erfolgen.

Wie oben beschrieben, wird dem Ausgangsmaterial in der Regel zur Bildung der Poren mindestens ein Porenbildner beigemischt. Dieser Porenbildner kann beispielsweise mindestens ein Material umfassen, welches beim anschließenden Sintern die poröse Struktur der Diffusonsbarriere bedingt. Beispielsweise kann dies ein Material sein, welches beim Sintern chemisch und/oder thermisch umgesetzt wird, beispielsweise verbrennt, so dass sich die Porenhohlräume ausbilden. Ein bekanntes Beispiel derartiger Porenbildner sind Glaskohle und/oder Theobromin.

Zur Erzeugung der unterschiedlichen Bereiche mit unterschiedlicher Porengröße wäre es nun möglich, beim Drucken unterschiedliche Ausgangsmaterialien zu verwenden, beispielsweise Materialien mit unterschiedlicher Beimengung an Porenbildner. Da, wie oben beschrieben, der erste Bereich jedoch von seiner Längserstreckung her vorzugsweise erheblich geringer ist als der zweite Bereich, wäre für diese Unterteilung eine Drucktechnik mit extrem hoher Auflösung erforderlich, wobei dennoch hohe Bauteiltoleranzen der Diffusionsbarrieren bzw. des Verhältnisses der Längen 11 und 12 der ersten bzw. zweiten Bereiche auftreten könnten.

Es wird daher erfindungsgemäß vorgeschlagen, die geringere Porengröße in dem mindestens einen ersten Bereich dadurch zu generieren, dass weiterhin ein Sinterhilfsmittel und/oder eine Sinterbremse verwendet wird, um die geringere Porengröße in dem ersten Bereich einzustellen. Unter einem "Sinterhilfsmittel" sind dabei beliebige Zusatzstoffe zu verstehen, welche eine Versinterung des Ausgangsmaterials begünstigen und somit die Porenbildung verringern bzw. verhindern. So kann das Sinterhilfsmittel beispielsweise mindestens eines der folgenden Materialien umfassen: Silizium, ein Oxid des Siliziums. Auch andere Arten von Sinterhilfsmitteln sind jedoch selbstverständlich einsetzbar. Unter einer "Sinterbremse" ist dementsprechend ein Zusatzstoff zu verstehen, welcher die Versinterung des Ausgangsmaterials behindert. Auch dies kann unter Umständen zur Erzeugung einer verringerten Porengröße genutzt werden. Als Beispiele möglicher Sinterbremsen sind zu Al₂O₃ und/oder Y₂O₃ nennen.

Der Vorteil des Sinterhilfsmittels besteht darin, dass dieses auch "von außen" an das Ausgangsmaterial herangetragen werden kann, angrenzend beispielsweise an den ersten Bereich, so dass kein Aufbringen unterschiedlicher Ausgangsmaterialien mit hoher Auflösung erforderlich ist. Insbesondere kann, wie oben in einer Ausführungsform beschrieben, die Verbindung vor der Diffusionsbarriere einen äußeren Hohlraum umfassen, wobei das Sinterhilfsmittel vor dem Sintern in diesen äußeren Hohlraum eingebracht werden kann. Dabei kann das Sinterhilfsmittel allein in diesen äußeren Hohlraum eingebracht werden oder in Kombination mit weiteren Stoffen. Insbesondere kann, zur Ausbildung des äußeren Hohlraums, ein "Platzhaltermaterial" verwendet werden, welches die Struktur des äußeren Hohlraums definiert und welches beim Sintern umgewandelt wird. Beispielsweise kann dieses Platzhaltermaterial wiederum Glaskohle umfassen, welche beim Sintern verbrennt, wobei der äußere Hohlraum entsteht. Das Sinterhilfsmittel kann diesem Platzhaltermaterial beigemischt werden. Beispielsweise kann ein Zusatz zwischen 1 und 20%, vorzugsweise ca. 10%, SiO₂ als Sinterhilfsmittel zur Glaskohle als Platzhaltermaterial erfolgen. Hierdurch erfolgt eine gleichmäßige Ablagerung von SiO₂ auf der Oberfläche des umgebenden Materials, insbesondere des umgebenden ZrO₂, und vorzugsweise auf der Oberfläche der Diffusionsbarriere. Dies führt zu einer verbesserten Versinterung der vordersten Schicht der Diffusionsbarriere trotz der nach Ausbrand des Porenbildners verbliebenen Poren. Hierdurch lässt sich auf einfache Weise der feinporige erste Bereich ausbilden, ohne dass aufwendige Drucktechniken unterschiedlicher Ausgangsmaterialien der Diffusionsbarriere mit hoher Auflösung verwendet werden müssen. In diesem ersten Bereich findet dann vorzugsweise keine Strömung mehr statt.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: ein einfaches Ausführungsbeispiel eines erfindungsgemäß modifizierbaren Sensorelements in Schnittdarstellung;
- Figur 2: eine schematische Darstellung der Druckverhältnisse vor, innerhalb und hinter der Diffusionsbarriere;
- Figur 3: eine schematische Darstellung der Auswirkung von Diffusionsprozessen auf den Transport eines Verunreinigungsteilchens;
- Figur 4: eine schematische Darstellung der Auswirkung von Strömungstransportprozessen auf den Transport von Verunreinigungsteilchen;
- Figur 5: eine vergrößerte Darstellung der Verbindung zwischen Messgasraum und zweiter Elektrode des Sensorelements in Figur 1 mit einer dem Stand der Technik entsprechenden Diffusionsbarriere;
- Figur 6: eine erfindungsgemäße Modifikation der Diffusionsbarriere der Anordnung gemäß Figur 5;
- Figur 7: einen ersten Teilschritt eines Herstellungsverfahrens eines erfindungsgemäßen Sensorelements; und
- Figur 8: einen zweiten Teilschritt des Herstellungsverfahrens zur Herstellung eines erfindungs gemäß en Sensorelements.

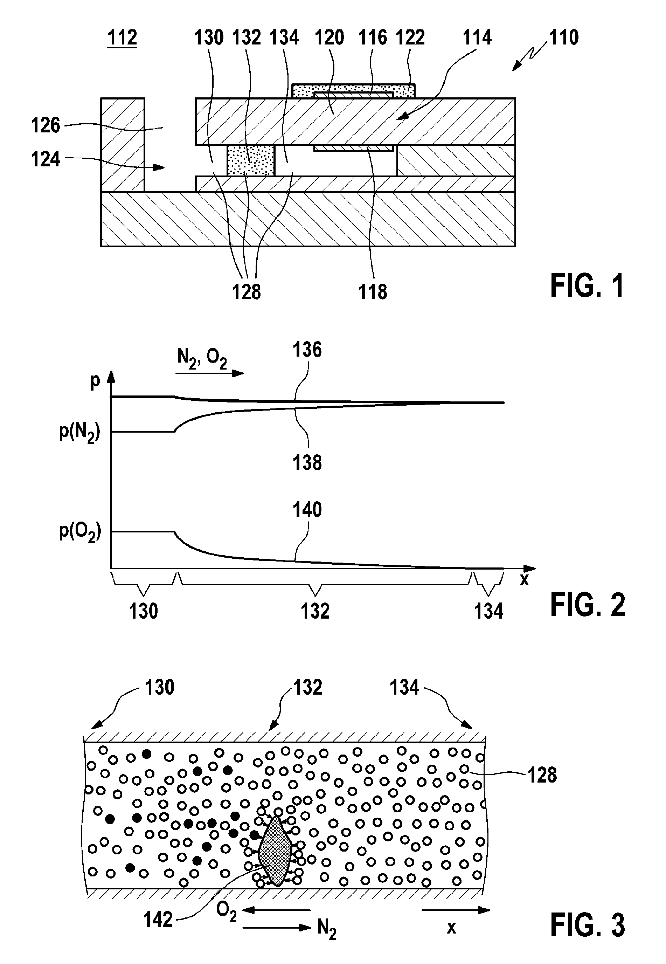

In Figur 1 ist ein stark vereinfachtes Ausführungsbeispiel eines möglichen Sensorelements 110 dargestellt, welches im Rahmen der vorliegenden Erfindung einsetzbar ist. Das Sensorelement 110 ist dabei ausgestaltet, um eine Sauerstoffkonzentration in einem Messgasraum 112 zu bestimmen. Das Sensorelement 110 weist in diesem einfachen Ausführungsbeispiel eine Pumpzelle 114 mit einer ersten Elektrode 116, einer zweiten Elektrode 118 und einen, die beiden Elektroden 116, 118 verbindenden Festelektrolyten 120 auf Während die erste Elektrode 116 über eine gasdurchlässige Schutzschicht 122 mit dem Messgasraum 112 in Verbindung steht und in diesem Ausführungsbeispiel auf der Oberfläche des Sensorelements 110 angeordnet ist, ist die zweite Elektrode 118 im Inneren des Schichtaufbaus des Sensorelements 110 angeordnet. Messgas kann über eine Verbindung 124 vom Messgasraum 112 zur zweiten Elektrode 118 gelangen. Diese Verbindung 124 umfasst in diesem Ausführungsbeispiel ein im Wesentlichen senkrecht zum Schichtaufbau angeordnetes Gaszutrittsloch 126, sowie einen senkrecht von diesem Gaszutrittsloch 126 abzweigenden Verbindungskanal 128. Der Verbindungskanal 128 ist in drei Bereiche unterteilt und umfasst auf der dem Gaszutrittsloch 126 zuweisenden Seite einen äußeren Hohlraum 130, eine an diesen äußeren Hohlraum 130 angrenzende Diffusionsbarriere 132, sowie einen im Bereich der zweiten Elektrode 118 angeordneten inneren Hohlraum 134. Insofern kann das Sensorelement 110 beispielsweise als Sensorelement mit "zurückgesetzter Diffusionsbarriere 132" beschrieben werden, wobei beispielsweise auf die DE 198 57 471 A1 verwiesen werden kann.

Es sei darauf hingewiesen, dass das Sensorelement 110 weitere Elemente, wie beispielsweise ein oder mehrere Heizelemente oder zusätzliche Elemente umfassen kann, welche in Figur 1 nicht dargestellt sind. Weiterhin handelt es sich bei dem in Figur 1 dargestellten Sensorelement 110 nur um ein Ausführungsbeispiel einer Vielzahl möglicher Ausführungsbeispiele mit Diffusionsbarrieren 132, welche im Rahmen der vorliegenden Erfindung erfindungsgemäß modifiziert werden können.

Anhand der Figuren 2 bis 4 soll im Folgenden die Problematik der Verunreinigung beschrieben werden, wobei weitgehend auf die obige Diskussion verwiesen werden kann. So ist in Figur 2 beispielhaft und schematisch ein Druckverlauf entlang einer Koordinate x parallel zum Verlauf der Verbindung 124 im Verbindungskanal 128 dargestellt. Dabei sind die Kurven 136 für den Gesamtdruckverlaufp, 138 für den Stickstoff-Partialdruckverlauf und 140 für den Sauerstoff-Partialdruckverlauf schematisch dargestellt.

Im Äußeren Hohlraum 130 herrscht im stark mageren Bereich ein Partialdruckverhältnis von ca. 80% Stickstoff zu 20% Sauerstoff, bei einem Gesamtdruck von ca. 1 bar. Aus dem inneren Hohlraum 134 wird jedoch durch die Pumpzelle 114 Sauerstoff abgepumpt, so dass der Sauerstoff-Partialdruck 140 hin zu diesem inneren Hohlraum 134 absinkt. Damit steigt der Partialdruck des Stickstoffs, also der Anteil des Stickstoffs an der Atmosphäre im inneren Hohlraum 134, an.

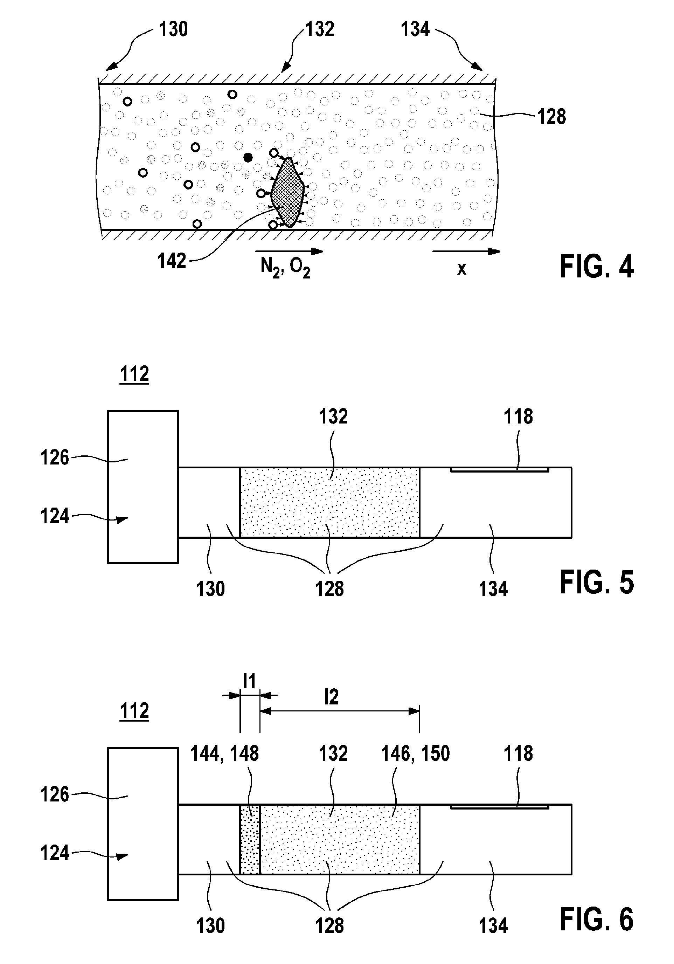

Die Auswirkungen dieser Druck- und Partialdruckverhältnisse auf die Diffusion bzw. Strömung sind in den Figuren 3 und 4 symbolisch dargestellt. Dabei bezeichnen die offenen Kreise symbolisch Stickstoff-Moleküle (N₂), und die geschlossenen Kreise bezeichnen symbolisch Sauerstoff-Moleküle (O₂). Im äußeren Hohlraum 130 beträgt der Gesamtdruck ca. 1 bar, wobei der Sauerstoff-Partialdruck ca. 0,192 bar, und der Stickstoff-Partialdruck ca. 0,768 bar beträgt. Die Stickstoffkonzentration beträgt also rund 80%, die Sauerstoffkonzentration rund 20%. Im inneren Hohlraum 134 hingegen, aus welchem der Sauerstoff nahezu vollständig abgepumpt wird, beträgt die Sauerstoffkonzentration hingegen rund 0%, und die Stickstoffkonzentration hingegen ca. 100%. Da bei dem in Figur 3 dargestellten Diffusionsprozess Konzentrationsunterschiede die treibende Kraft darstellen, und da sowohl für den Stickstoff als auch für den Sauerstoff der Konzentrationsunterschied zwischen dem äußeren Hohlraum 130 und dem inneren Hohlraum 134 näherungsweise 20% beträgt, diffundiert somit Sauerstoff aus dem inneren Hohlraum 134 hin zum äußeren Hohlraum 130, und Stickstoff in die Gegenrichtung, wobei sich die Diffusionsströme zumindest näherungsweise gegenseitig aufheben. Der Impulsübertrag durch die Sauerstoff-Diffusion und der Impulsübertrag durch die Stickstoff-Diffusion auf ein Figur 3 symbolisch dargestelltes, im Verbindungskanal 128 angeordnetes Verunreinigungsteilchen 142, beispielsweise ein Ascheteilchen, hebt sich somit näherungsweise auf, so dass das Verunreinigungsteilchen 142 aufgrund des Diffusionsprozesses nicht transportiert wird.

In Figur 4 sind hingegen die Verhältnisse der Strömung dargestellt. Im Gegensatz zur Diffusion stellt bei der Strömung nicht der Konzentrationsunterschied sondern der Druckunterschied zwischen äußerem Hohlraum 130 und innerem Hohlraum 134 die treibende Kraft dar. Mit dem in den Figuren 3 und 4 dargestellten Bild offener und geschlossener Kreise für die Stickstoff- bzw. Sauerstoffteilchen ist für diesen Prozess also nur die Differenz der Teilchen auf der linken Seite in Figur 4 (auf Seiten des äußeren Hohlraums 130) zur Anzahl der Teilchen rechts in Figur 4 (auf Seiten des inneren Hohlraums 134) relevant. Dies ist symbolisch in Figur 4 dadurch dargestellt, dass die "überschüssigen" Teilchen links des Verunreinigungsteilchens 142 hervorgehoben sind. Getrieben durch die Druckdifferenz zwischen äußerem Hohlraum 130 und innerem Hohlraum 134, welche beispielsweise ca. 40 mbar beträgt, bewegen sich diese "überschüssigen" Teilchen in Figur 4 nach rechts, hinein in den inneren Hohlraum 134, und üben dabei eine Kraft auf das Verunreinigungsteilchen 142 aus.

Die in Figur 3 dargestellte Diffusion und die in Figur 4 dargestellte Strömung werden durch unterschiedliche Faktoren beeinflusst. Während der Diffusionsstrom durch den Diffusionswiderstand und den Konzentrationsunterschied bedingt wird, wird die Strömung durch einen Strömungswiderstand und die Druckdifferenz bedingt. Erfindungsgemäß wird auf den Strömungswiderstand und den Diffusionswiderstand unterschiedlich Einfluss genommen, um einen strömungsbedingten Impulsübertrag auf das Verunreinigungsteilchen 142 auszuschließen. Dabei wird erfindungsgemäß ein erhöhter Strömungswiderstand verwendet innerhalb eines Bereiches der Druckkennlinie 136 in Figur 2, in welchem dieser Druckverlauf 136 des Gesamtdrucks einen besonders hohen Gradienten aufweist, also in dem dem äußeren Hohlraum 130 zuweisenden Anfangsbereich der Diffusionsbarriere 132.

In den Figuren 5 bis 8 ist in vergrößerter Darstellung schematisch die Verbindung 124 zwischen dem Messgasraum 112 und der zweiten Elektrode 118 gezeigt. Für die Beschreibung der hier ausschnittsweise gezeigten Bestandteile dieser Verbindung 124 kann auf die obige Beschreibung der Figur 1 verwiesen werden. Dabei ist bei der Darstellung gemäß Figur 5, welche üblichen Diffusionsbarrieren (beispielsweise der in DE 198 57 471 A1 gezeigten Diffusionsbarriere) entspricht, die Diffusionsbarriere 132 homogen ausgestaltet und weist einen gleichförmigen Porendurchmesser auf

In Figur 6 ist demgegenüber eine erfindungsgemäße Diffusionsbarriere 132 gezeigt, welche in diesem Ausführungsbeispiel einen ersten Bereich 144 und einen zweiten, sich an den ersten Bereich 144 hin zum inneren Hohlraum 134 anschließenden zweiten Bereich 146 aufweist.

Dabei beinhaltet der erste Bereich 144 ein erstes poröses Material 148, und der zweite poröse Bereich 146 ein zweites poröses Material 150. Wie oben beschrieben, können diesen porösen Materialien 148, 150 auch chemisch zumindest teilweise identisch sein, unterscheiden sich hingegen in ihren Porendurchmessern. So kann beispielsweise bezüglich der bevorzugten Porendurchmesser und weiterer Parameter dieser porösen Materialien 148, 150 auf die obige Beschreibung verwiesen werden, ebenso wie auf die bevorzugten Längen 11 und 12 der Bereiche 144, 146 sowie deren Verhältnisse.

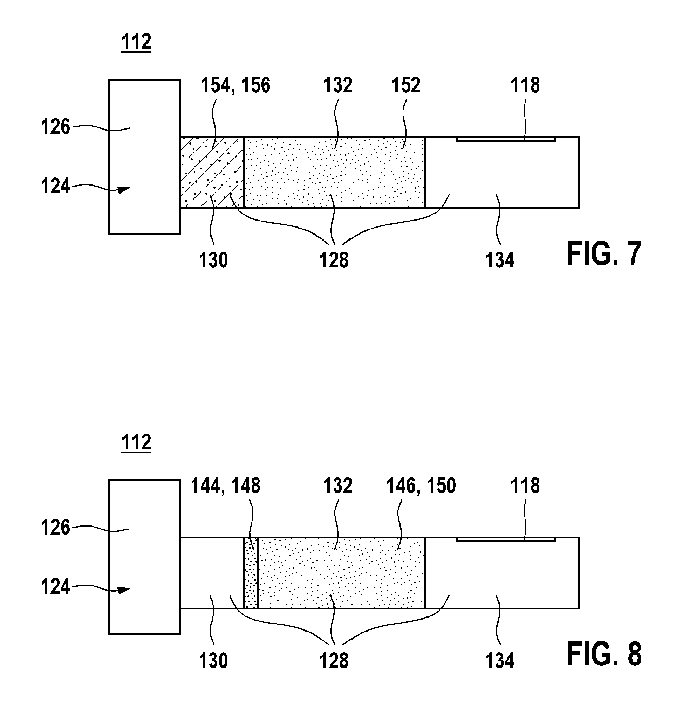

Zur Erzeugung der Diffusionsbarriere 132 werden nach dem Stand der Technik üblicherweise Schichttechnologien eingesetzt. Beispielsweise kann, wie oben beschrieben, die Diffusionsbarriere mittels eines Ausgangsmaterials 152 in Form einer Paste erzeugt werden, welche, neben einem Ausgangsmaterial für das bzw. die porösen Materialien 148, 150, in der Regel einen Porenbildner beinhaltet. Zur Erzeugung der Diffusionsbarriere mit dem ersten Bereich 144, welcher als extrem feinporiger Bereich im Eingangsbereich der Diffusionsbarriere 132 ausgebildet ist, kann beispielsweise das in den Figuren 7 und 8 symbolisch und lediglich auszugsweise dargestellte Verfahren verwendet werden. Hierbei wird zunächst das Ausgangsmaterial 152 in dem Bereich, in welchem sich später die Diffusionsbarriere 132 ausbildet (d.h. nach dem Sintern), aufgedruckt, beispielsweise mittels eines Siebdruckverfahrens oder in Form einer Tauchschicht. Dieses Aufbringen kann auch in Kombination mit einer oder mehreren Thermoschockschutzschichten erfolgen. Das Aufbringen kann dabei auf Substrate, beispielsweise darunterliegende, unfertige und ungesinterte Teilschichten des Sensorelements 110, erfolgen.

Um die weiteren Bestandteile des Verbindungskanals 128 zu erzeugen, kann beispielsweise ein Platzhaltermaterial 154 verwendet werden, welches die spätere Struktur des Verbindungskanals 128 vordefiniert und verhindert, dass beispielsweise benachbarte Schichten (wie z.B. Festelektrolyt-Material des Festelektrolyten 120) in diesen Bereich des Verbindungskanals 128 eindringen. Das Platzhaltermaterial 154, welches beispielsweise Glaskohle umfassen kann, verbrennt beim anschließenden Sintern vollständig, so dass sich beispielsweise der äußere Hohlraum 130 und/oder der innere Hohlraum 134 ausbilden.

Nach einem erfindungs gemäßen Verfahren wird der zweite Bereich 144 der Diffusionsbarriere 132 dadurch hergestellt, dass dem Platzhaltermaterial 154 im Bereich des (sich später dort ausbildenden) äußeren Hohlraums 130 ein Sinterhilfsmittel 156 beigemischt wird. Wie oben beschrieben, kann dieses Sinterhilfsmittel 156 beispielsweise einen Zusatz von 1 bis 20%, vorzugsweise ca. 10%, Siliziumdioxid zur Glaskohle umfassen.

Nach dem Sintern, also in dem in Figur 8 dargestellten Zustand, welcher im Wesentlichen dem Aufbau gemäß Figur 6 entspricht, hat sich dieses Sinterhilfsmittel 156 unter anderem mit einer Oberflächenschicht des Ausgangsmaterials 152 vermischt und dort zur Ausbildung des extrem feinporigen ersten Bereichs 144 geführt, da in diesem Bereich eine verbesserte Versinterung der vordersten Schicht des Ausgangsmaterials 152 stattfindet, trotz der nach Ausbrand des Porenbildners aus dem Ausgangsmaterial 152 verbliebenen Poren. In diesem ersten Bereich 144 findet dann nur noch eine geringfügige oder vorzugsweise gar keine Strömung mehr statt.

## Patentansprüche

1. Sensorelement (110) zur Bestimmung mindestens einer physikalischen Eigenschaft eines Gases in mindestens einem Messgasraum (112), insbesondere zur Bestimmung einer Sauerstoffkonzentration im Abgas einer Brennkraftmaschine, wobei das Sensorelement (110) mindestens eine erste Elektrode (116) und mindestens eine zweite Elektrode (118) und mindestens einen die erste Elektrode (116) und die zweite Elektrode (118) verbindenden Festelektrolyten (120) umfasst, wobei die zweite Elektrode (118) über mindestens eine Verbindung (124) mit Gas aus dem Messgasraum (112) beaufschlagbar ist, wobei die Verbindung (124) mindestens eine Diffusionsbarriere (132) aufweist, **dadurch gekennzeichnet, dass** die Diffusionsbarriere (132) mindestens einen ersten Bereich (144) und mindestens einen zweiten Bereich (146) aufweist, wobei der zweite Bereich (146) zwischen dem ersten Bereich (144) und der zweiten Elektrode (118) angeordnet ist, wobei der erste Bereich (144) eine geringere Porengröße aufweist als der zweite Bereich (146).

2. Sensorelement (110) nach dem vorhergehenden Anspruch, wobei der erste Bereich (144) und der zweite Bereich (146) zusammen mindestens einen der folgenden Verläufe der Porengröße aufweisen:
- einen gestuften Verlauf, mit einer hin zur zweiten Elektrode (118) zumindest abschnittsweise stufenweise zunehmenden Porengröße;
- einen stetigen Verlauf, mit einer hin zur zweiten Elektrode (118) zumindest abschnittsweise stetig zunehmenden Porengröße.

3. Sensorelement (110) nach einem der vorhergehenden Ansprüche, wobei zwischen der Diffusionsbarriere (132) und der zweiten Elektrode (118) mindestens ein innerer Hohlraum (134) angeordnet ist.

4. Sensorelement (110) nach einem der vorhergehenden Ansprüche, wobei der erste Bereich (144) mindestens ein erstes poröses Material mit mindestens einer der folgenden Eigenschaften aufweist:
- einem mittleren Porendurchmesser zwischen 0,2 Mikrometern und 3 Mikrometern;
- einer mittleren Porosität zwischen 5% und 50%;
- einem Labyrinthfaktor L1 zwischen 1,2 und 3.

5. Sensorelement (110) nach einem der vorhergehenden Ansprüche, wobei der zweite Bereich (146) mindestens ein zweites poröses Material mit mindestens einer der folgenden Eigenschaften aufweist:
- einem mittleren Porendurchmesser zwischen 1 Mikrometer und 10 Mikrometern;
- einer mittleren Porosität zwischen 20% und 80%;
- einem Labyrinthfaktor L2 zwischen 1 und 2.

6. Sensorelement (110) nach einem der vorhergehenden Ansprüche, wobei die Diffusionsbarriere (132) mindestens eine der folgenden Eigenschaften aufweist:
- der erste Bereich (144) weist eine Längserstreckung 11 entlang der Verbindung (124) auf, welche im Bereich zwischen 0,1 mm und 3 mm liegt;
- der zweite Bereich (146) weist eine Längserstreckung 12 entlang der Verbindung (124) auf, welche im Bereich zwischen 0,1 mm und 10 mm liegt;
- der erste Bereich (144) weist eine Längserstreckung 11 entlang der Verbindung (124) auf, und der zweite Bereich (146) weist eine Längserstreckung 12 entlang der Verbindung (124) auf, wobei das Verhältnis zwischen 11 und 12 im Bereich zwischen 1:1 und 1:100 liegt.

7. Sensorelement (110) nach einem der vorhergehenden Ansprüche, wobei die Verbindung (124) mindestens einen Verbindungskanal (128) umfasst, wobei die Diffusionsbarriere (132) in dem Verbindungskanal (128) angeordnet ist, wobei in dem Verbindungskanal (128) vor der Diffusionsbarriere (132) mindestens ein äußerer Hohlraum (130) angeordnet ist.

8. Sensorelement (110) nach dem vorhergehenden Anspruch, wobei die Verbindung (124) weiterhin ein Gaszutrittsloch (126) umfasst, wobei der Verbindungskanal (128) winklig von dem Gaszutrittsloch (126) abzweigt.

9. Verfahren zur Herstellung eines Sensorelements (110) zur Bestimmung mindestens einer physikalischen Eigenschaft eines Gases in mindestens einem Messgasraum (112), insbesondere eines Sensorelements (110) nach einem der vorhergehenden Ansprüche, insbesondere zur Bestimmung einer Sauerstoffkonzentration im Abgas einer Brennkraftmaschine, wobei das Sensorelement (110) mindestens eine erste Elektrode (116) und mindestens eine zweite Elektrode (118) und mindestens einen die erste Elektrode (116) und die zweite Elektrode (118) verbindenden Festelektrolyten (120) umfasst, wobei die zweite Elektrode (118) über mindestens eine Verbindung (124) mit Gas aus dem Messgasraum (112) beaufschlagbar ist, wobei die Verbindung (124) mindestens eine Diffusionsbarriere (132) aufweist, wobei die Diffusionsbarriere (132) mindestens einen ersten Bereich (144) und mindestens einen zweiten Bereich (146) aufweist, wobei der zweite Bereich (146) zwischen dem ersten Bereich (144) und der zweiten Elektrode (118) angeordnet ist, wobei der erste Bereich (144) eine geringere Porengröße aufweist als der zweite Bereich (146), wobei die Diffusionsbarriere (132) durch Sintern mindestens eines Ausgangsmaterials (152) erzeugt wird, wobei die gegenüber der Porengröße des zweiten Bereichs (146) geringere Porengröße in dem ersten Bereich (144) durch Verwendung eines Sinterhilfsmittels (156) und/oder einer Sinterbremse erzeugt wird.

10. Verfahren nach dem vorhergehenden Anspruch, wobei das Sinterhilfsmittel (156) mindestens eines der folgenden Materialien umfasst: Silizium; ein Oxid des Siliziums.

11. Verfahren nach einem der beiden vorhergehenden Ansprüche, wobei die Sinterbremse mindestens eines der folgenden Materialien umfasst: Al₂O₃; Y₂O₃.

12. Verfahren nach einem der beiden vorhergehenden Ansprüche, wobei das Sensorelement (110) in der Verbindung (124) vor der Diffusionsbarriere (132) mindestens einen äußeren Hohlraum (130) aufweist, wobei das Sinterhilfsmittel (156) vor dem Sintern in den äußeren Hohlraum (130) eingebracht wird.

13. Verfahren nach dem vorhergehenden Anspruch, wobei ein Platzhaltermaterial (154) verwendet wird, wobei das Platzhaltermaterial (154) beim Sintern umgewandelt wird, insbesondere verbrennt, wobei der äußere Hohlraum (130) entsteht, wobei das Sinterhilfsmittel (156) dem Platzhaltermaterial (154) ganz oder teilweise beigemischt wird.
